# EUROPEAN PATENT SPECIFICATION

(11) **EP 4 199 138 B1**
(45) Date of publication and mention of the grant of the patent: **12.08.2026**
(21) Application number: 22825300.1
(22) Date of filing: 15.06.2022
(51) Int. Cl.: B05C 5/02, B05C 11/10, H01M 4/04, H01M 10/04, H01M 4/139

(54) **ELECTRODE COATING SLURRY CIRCULATION SYSTEM CAPABLE OF CIRCULATING SLURRY WHEN LINE STOP OCCURS, AND ELECTRODE COATING SLURRY CIRCULATION METHOD USING SAME**
ELEKTRODENBESCHICHTUNGSAUFSCHLÄMMUNGSZIRKULATIONSSYSTEM MIT SCHLAMMZIRKULATION BEI LINIENSTOPP UND ELEKTRODENBESCHICHTUNGSAUFSCHLÄMMUNGSZIRKULATIONSVERFAHREN DAMIT
SYSTÈME DE CIRCULATION DE BOUILLIE DE REVÊTEMENT D'ÉLECTRODE CAPABLE DE FAIRE CIRCULER LA BOUILLIE LORSQU'UN ARRÊT DE LIGNE SE PRODUIT, ET PROCÉDÉ DE CIRCULATION DE BOUILLIE DE REVÊTEMENT D'ÉLECTRODE L'UTILISANT

(30) Priority: 16.06.2021 KR 20210077884; 14.06.2022 KR 20220071892
(43) Date of publication of application: 21.06.2023
(73) Proprietor: LG Energy Solution, Ltd., Seoul 07335 (KR)
(72) Inventor: SEO, Sangjin, Daejeon 34122 (KR); LEE, Gil Seon, Daejeon 34122 (KR); AHN, Chang Bum, Daejeon 34122 (KR); JANG, Yeongcheol, Daejeon 34122 (KR); JUNG, Jea Bong, Daejeon 34122 (KR)
(74) Representative: Goddar, Heinz J.
(86) International application number: PCT/KR2022/008442
(87) International publication number: WO 2022/265377

(56) References cited:
- JP-A- 2013 229 176
- JP-A- 2015 029 973
- JP-A- H1 012 220
- KR-A- 20130 122 909
- KR-A- 20180 030 529
- KR-A- 20210 056 687
- KR-B1- 101 211 776
- US-A1- 2004 062 866

## Description

### [Cross Reference to Related Applications]

This application claims the benefits of priorities based on Korean Patent Application No. 10-2021-0077884 filed on June 16, 2021 and Korean Patent Application No. 10-2022-0071892 filed on June 14, 2022.

### [Technical Field]

The present invention relates to a slurry circulation system for electrode coating capable of circulating slurry in the event of a line stop and a slurry circulation method for electrode coating using the same. Specifically, the present invention relates to a slurry circulation system for electrode coating capable of circulating slurry even in the event of a line stop by changing the structure of the coating die and a slurry circulation method for electrode coating using the same.

### [Background Art]

As the application range of secondary batteries is expanded from small-sized portable electronic devices to medium and large-sized electric vehicles (EV), electric storage systems (ESS), electric ships, etc., the demand for lithium secondary batteries with high capacity, high energy density and long lifetime is rapidly increasing.

The electrode manufacturing process for manufacturing the positive electrode and the negative electrode which is essential for the production of the secondary battery comprises a coating process usually performed by applying an electrode slurry, in which an active material and an electrically conductive material are mixed, on a current collector, and then drying it, wherein the coating process can be performed using the electrode active material slurry supplied from the tank using a coating die device for manufacturing electrodes. In addition, in the event of a line stop that stops the coating process, there is no separate system for circulating the slurry, and thus by discharging the slurry in the die back to the supply tank through the return valve connected to the bottom of the die, the slurry was prevented from remaining in the coating die.

However, in the event of a line stop, when the residual slurry is discharged from the die through the return valve, since the slurry does not circulate in the coating process system comprising the tank and the coating die, agglomeration phenomenon of the slurry was frequently occurred. In particular, the slurry was agglomerated in the coating die to cause a macromolecule or a gelation phenomenon, and when the electrode was coated after the line stop, a surface defect phenomenon such as pinhole or dent or a line defect phenomenon in which the slurry was caught between the C-roll and the coating die was occurred. As a result, this led to deterioration of the coating quality and the disposal of electrodes that did not meet the standards, and thus there was a problem that the yield of the electrode process is decreased and the Overall Equipment Effectiveness (OEE) is decreased.

Therefore, in order to prevent a phenomenon in which the slurry is stagnant, agglomerated, or gelled in the electrode coating device for a secondary battery, thereby leading to deterioration of coating quality and productivity, there is a need for research on a system and method capable of circulating a slurry even in the event of a line stop in the coating process system comprising a slurry supply tank and a coating die.

(Patent Document 1) Japanese Patent Publication No. 6280383 "Apparatus for manufacturing electrode plate for battery"

The prior art relevant to the present invention is given by JP 2015 029973 A, KR 2021 0056687 A and US 2004/062866 A1. It is known a coating system for supplying coating liquid to a coating object including a die head, a liquid tank for storing the coating liquid, a supply pipe for supplying the coating liquid sent from the liquid tank into an inner passage of the die head, and a return pipe for returning the coating liquid from the inner passage of the die head into the liquid tank.

### [Disclosure]

### [Technical Problem]

In order to solve the above problems, the inventors of the present invention intend to provide a slurry circulation system for electrode coating capable of slurry circulation in the event of a line stop, which can prevent a phenomenon in which the slurry is stagnant or agglomerated in the die in advance by continuously circulating the electrode active material slurry throughout the coating process system in the event of a line stop, and improve coating quality, process yield and productivity by minimizing surface defects and line defects that may occur during electrode coating after the line stop, and a slurry circulation method for electrode coating using the same.

### [Technical Solution]

The present invention is defined according to the subject matter of the appended independent claims. Particular embodiments are given by the additional features of the appended dependent claims.

There is provided a slurry circulation system for electrode coating comprising a coating die for applying a electrode active material slurry on the current collector; a tank for storing the electrode active material slurry to be supplied to the coating die; and a circulation piping for connecting the coating die and the tank, wherein the slurry circulation system is a system in which the slurry circulates through the circulation piping connected from at least one of a left surface, a right surface, a rear surface and a lower surface of the coating die to the tank, at the time of a line stop.

The slurry circulation system for electrode coating is a system in which the slurry circulates through the circulation piping connected from the rear surface of the coating die to the tank, at the time of a line stop.

In an embodiment of the present invention, the slurry circulation system for electrode coating may be a system in which the slurry circulates through the circulation piping connected respectively from the left and right surfaces of the coating die to the tank.

The coating die includes one manifold part inside the die.

A slurry supply hole connected to the manifold part inside the die is located on the lower surface of the coating die, and the manifold part has a structure comprising a first flow path which comprises a first hollow part formed from the slurry supply hole in the direction of the upper surface; and a second flow path which comprises a second hollow part formed in both side directions around one end of the first flow path.

In an embodiment of the present invention, the slurry circulation system for electrode coating is a system in which a connection hole for connecting the circulation piping is located on at least one of the left surface, the right surface, the rear surface, and the lower surface of the coating die, and at the time of a line stop, the electrode active material slurry supplied through the connection hole moves in both side directions inside the coating die through a slurry movement path, and circulates to the tank through the circulation piping connected to the connection hole.

In an embodiment of the present invention, the slurry circulation system for electrode coating may further include a pump for supplying the slurry from the tank to the coating die; a filter; and a valve connected to the connection hole.

In an embodiment of the present invention, the coating die may include a discharging part to which the slurry for electrode coating is discharged.

In one embodiment of the present invention, the coating die may include a lip guard capable of blocking and opening the discharging part.

In an embodiment of the present invention, the slurry circulation system for electrode coating may further include a return valve; and a drain piping connecting the return valve and the tank, and at the time of a line stop, the return valve may open so that a part of the electrode active material slurry supplied from the tank is discharged into the tank through the drain piping.

According to the 'second aspect' of the present invention, the present invention provides a slurry circulation method for electrode coating using the slurry circulation system.

### [Advantageous Effects]

The slurry circulation system for electrode coating and the slurry circulation method for electrode coating using the same according to the present invention have an effect that even in the event of a line stop when the coating process of the secondary battery is stopped, through the system in which the slurry does not remain in the die and continuously circulates throughout the process including the tank and the die, a macromolecule or a gelation phenomenon due to agglomeration of the slurry in the die does not occur, and coating quality defects are minimized during the coating process after line stop, thereby improving the productivity.

In addition, the slurry circulation system for electrode coating and the slurry circulation method for electrode coating using the same according to the present invention have an advantage that the process temperature in the coating die can be remained unchanged even in the event of a line stop by providing a system that allows the slurry to circulate continuously, and thus the coating process can be effectively performed without a separate process even after the line stop is performed.

In addition, the slurry circulation system for electrode coating and the slurry circulation method for electrode coating using the same according to the present invention are applicable to both the positive electrode and the negative electrode coating process, and have an advantage of being able to respond regardless of the size of the current collector in the coating process using a slot die.

### [Description of Drawings]

FIG. 1 is a schematic diagram illustrating a flow through which a slurry is circulated and drained during a conventional line stop in the electrode coating process at the time of the manufacture of the secondary battery.
FIG. 2 shows (A) a photograph of the inside when the coating die is opened after the stop and (B) a photograph of surface defects occurring during the electrode coating after the stop, when the slurry is drained without circulating as in the prior art, in the event of a line stop.
FIG. 3 is a schematic diagram showing the flow through which the slurry is circulated and drained at the stop in the present invention in the coating process of the electrode during the manufacture of the secondary battery.
FIG. 4 shows an embodiment of the slurry circulation system for electrode coating according to the present invention.
FIG. 5 shows an embodiment of the slurry circulation system for electrode coating according to the present invention.
FIG. 6 is a schematic diagram showing a structure in which the circulation piping is connected to the left or right surface of the coating die in the slurry circulation system for electrode coating according to an example that does not fall within the scope of the claims.
FIG. 7 is a schematic diagram showing a structure in which the circulation piping is connected to the left and right surfaces of the coating die in the slurry circulation system for electrode coating according to an example that does not fall within the scope of the claims.
FIG. 8 is a schematic diagram showing a structure in which the circulation piping is connected to the rear surface of the coating die in one embodiment of the slurry circulation system for electrode coating of the present invention.
FIG. 9 shows a schematic diagram showing a structure in which the circulation piping is connected to the lower surface of the coating die in the slurry circulation system for electrode coating according to an example that does not fall within the scope of the claims.
FIG. 10 shows the internal structure of the coating die when the slurry circulates through the circulation piping connected to the left and right surfaces of the coating die in an example that does not fall within the scope of the claims.
FIG. 11 shows the internal structure of the coating die when the slurry circulates through the circulation piping connected to the rear surface of the coating die in the present invention.
FIG. 12 shows the internal structure of the coating die when the slurry circulates through the circulation piping connected to the lower surface of the coating die in an example that does not fall within the scope of the claims.
FIG. 13 shows the structure of the lip guard provided on the coating die in the present invention.
FIG. 14 shows the opening and closing structure of the lip guard provided in the coating die in the present invention.
FIG. 15 is an enlarged view of the structure in which the discharging part and the lip guard provided in the coating die in the present invention are in contact.

### [Best Mode]

Hereinafter, preferred embodiments are presented to help the understanding of the present invention, but the following embodiments are only provided for easier understanding of the present invention, and the present invention is not limited thereto.

In addition, the size or shape of the components shown in the drawings may be exaggerated for clarity and convenience of explanation, and terms specifically defined in consideration of the configuration and operation of the present invention may vary depending on the intention or custom of the user or operator, and definitions of these terms should be made based on the content throughout this specification.

Hereinafter, the present invention will be described in detail with reference to the accompanying drawings.

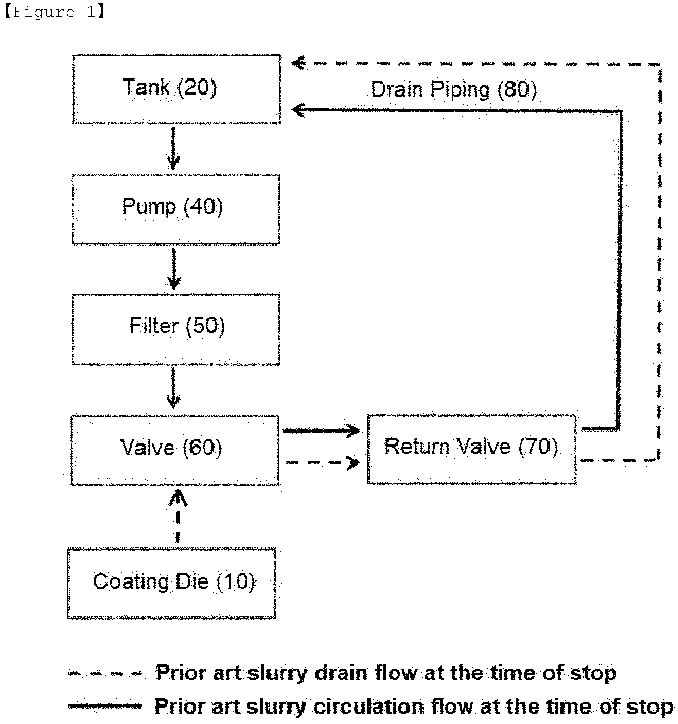

As a result of the experiment by the inventors of the present invention, in the conventional electrode coating process when manufacturing a secondary battery, since the slurry remaining in the die is only drained back to the tank using a return valve in the event of a line stop, as shown in FIG. 1, there was a problem that the slurry in the coating die was macromolecularized or gelled due to agglomeration. This eventually leads to a decrease in coating quality, and thus there was also a problem that electrodes that do not meet the quality standards are discarded after production, resulting in a loss of cost.

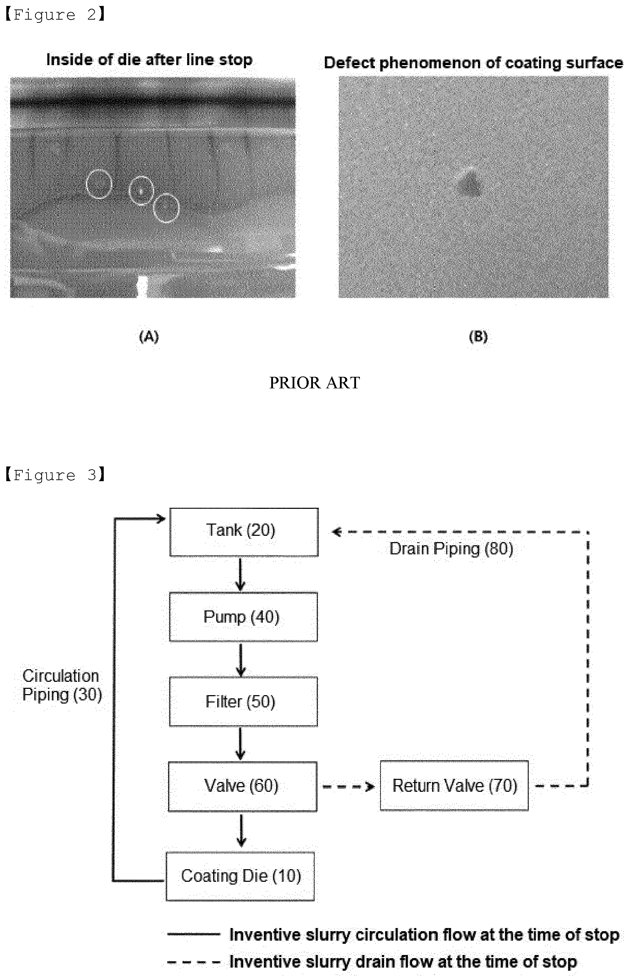

Specifically, looking at the inside of the coating die after the stop as shown in FIG. 2, the slurry was agglomerated or a large number of electrode powders were visually confirmed, and problems of surface defects in which pinholes or dents occur and line defects in which the slurry is caught in the C-roll and coating die were pointed out.

In order to solve the above problems, the inventors of the present invention came to invent a slurry circulation system for electrode coating capable of slurry circulation which is capable of circulating the slurry to the tank through circulation piping connected to at least one of a left surface, a right surface, a rear surface, and a lower surface of the die by changing the structure of the coating die so that the circulation piping may be connected to the coating die, and the slurry may be circulated through at least one of the left surface, the right surface, the rear surface, and the lower surface of the die, at the time of a line stop, and a slurry circulation method for electrode coating using the same.

In one embodiment of the present invention, the slurry circulation system for electrode coating is a system which comprises a coating die 10 for applying a electrode active material slurry on the current collector; a tank 20 for supplying the electrode active material slurry to the coating die; and a circulation piping 30 for connecting the coating die and the tank, and allows the slurry to circulate through the circulation piping 30 connected from at least one of the left surface, the right surface, the rear surface, and the lower surface of the coating die 10 to the tank 20 at the time of a line stop.

In the present specification, the line stop refers to any situation in which the coating process is stopped for a certain reason in the electrode coating process when the secondary battery is manufactured.

In the present specification, the left surface, the right surface, the rear surface and the lower surface of the coating die 10 may be defined as a left surface, a right surface, a rear surface, and a lower surface based on a front view of a lip end from which the slurry is discharged from the coating die.

In one embodiment of the present invention, the slurry circulation system for electrode coating comprises a coating die 10 for applying an electrode active material slurry on the current collector. In the electrode coating process, the electrode may be coated through a process of supplying the electrode active material slurry to the coating die 10, and then discharging it and applying it on the current collector, as an essential component for applying the electrode active material slurry on the current collector.

In one embodiment of the present invention, the coating die 10 may have a structure in which the structure of the slurry movement path inside the coating die 10 is changed in order to enable circulation of the slurry for electrode coating even in the event of a line stop, and the circulation piping 30 is connected to at least one of the left surface, the right surface, the rear surface, and the lower surface of the coating die.

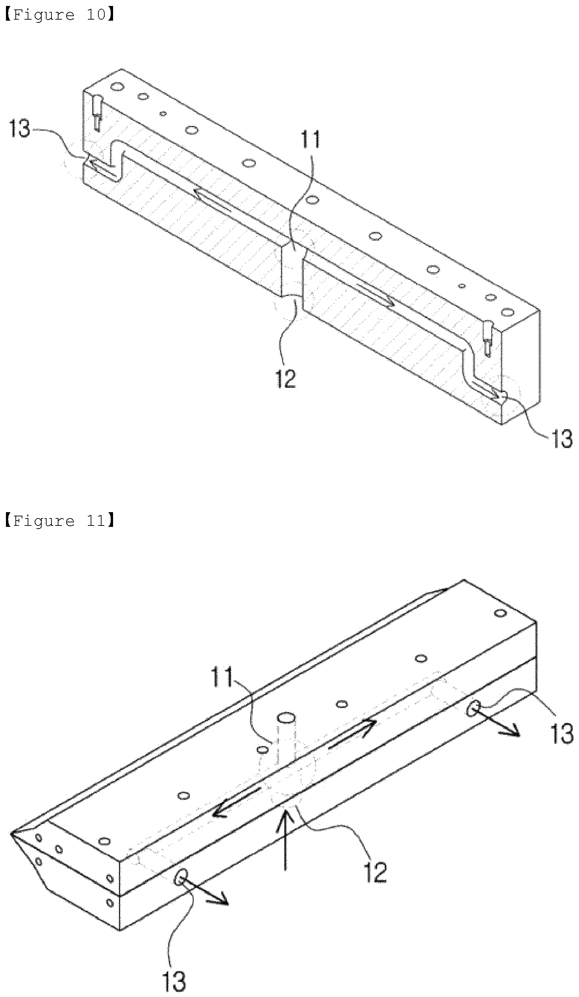

As shown in FIG. 10, the coating die 10 may comprise one manifold part 11 inside the die. It may have the effect of reducing the cost due to the structural change of the die and changing the conditions of the coating process, and preventing the increase in the wear of the die that may occur due to the non-uniform internal pressure of the die during the coating process, by incorporating one manifold part 11 without addition separately, in contrast to the case of using an additional manifold part for circulation of the active material slurry.

A slurry supply hole 12 connected to the manifold part 11 inside the die is located on the lower surface of the coating die 10, and the manifold part 11 may have a structure comprising a first flow path which comprises a hollow part formed from the slurry supply hole 12 to the direction of the upper surface, and a second flow path which comprises a hollow part formed in both side directions around one end of the first flow path.

Through the manifold part 11, the slurry supplied from the slurry supply hole 12 may move in the direction of the upper surface through the first flow path, and then, the slurry may circulate through the second flow path from one end of the first flow path to both side directions to maintain the process temperature in the coating die, at the time of a line stop, and it is possible to prevent the phenomenon that the slurry is stagnant and agglomerated inside the coating die. As shown in FIGS. 10 to 12, for example, the manifold part 11 may have a structure in which a T-shaped slurry movement path is formed therein.

In the present specification, the 'hollow part (void section)' may be defined as empty spaces formed inside the first flow path and the second flow path of the manifold part 11 to move the slurry.

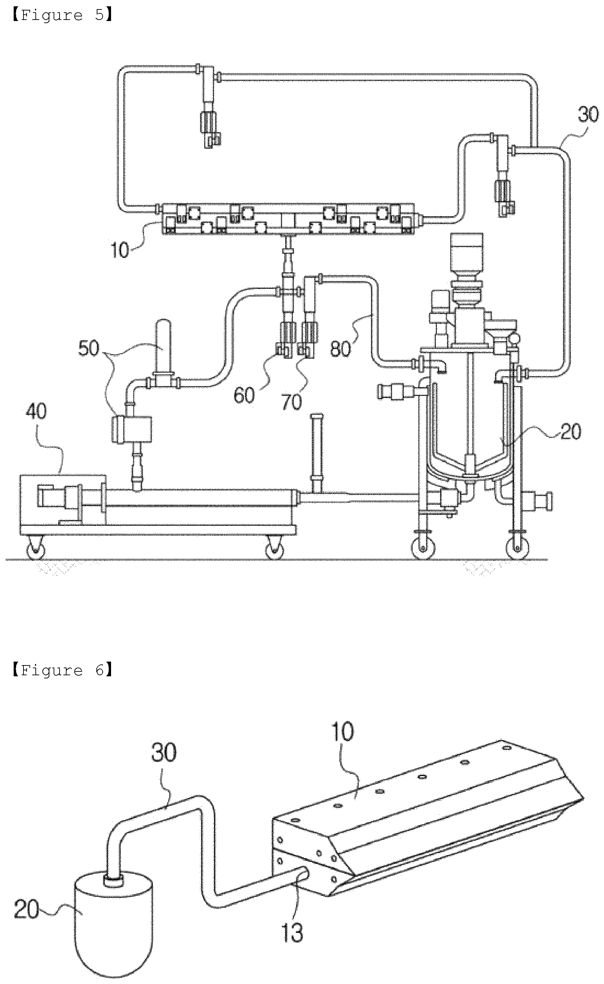

As shown in FIGS. 6 to 9, the connection hole 13 for connecting circulation piping may be located on at least one of a left surface, a right surface, a rear surface, and a lower surface of the coating die. The connection hole 13 has a configuration so that the circulation piping 30 leading to the tank 20 can be connected to the coating die 10, and its shape is not particularly limited as long as it can be connected to the circulation piping 30. The diameter of the connection hole 13 for connecting the circulation piping may preferably be the same as the diameter of the slurry supply hole 12, but is not particularly limited thereto.

In one embodiment of the present invention, the slurry circulation system for electrode coating comprises the tank 20 for supplying the electrode active material slurry to the coating die. The tank 20 stores and supplies the electrode active material slurry, and it is not particularly limited in the present invention as long as it is a tank capable of storing the electrode active material slurry circulated from the coating die again at the time of a line stop, and the tank may be a conventional tank publicly known in the art.

In one embodiment of the present invention, the slurry circulation system for electrode coating comprises the circulation piping 30 for connecting the coating die and the tank. As shown in FIG. 3, the slurry circulation system for electrode coating connects the circulation piping 30 from the coating die 10 to the tank 20 so that the slurry can be continuously circulated through it at the time of a stop. The circulation piping 30 is configured to be connected to the connection hole 13 in the coating die 10, and may be a piping that can be easily detached and attached to the connection hole 13.

In one embodiment of the present invention, the circulation piping 30 may be a flexible piping. Specifically, the gap between the die and the C-roll is widened at the time of a line stop. In this case, if a fixed type circulation piping is used, there may be problems with separation or deformation of the piping. Therefore, in order to prevent these problems, a flexible type piping that can be bent freely can be used instead of a fixed type circulation piping.

The larger the diameter of the circulation piping 30 is, the more effective the flow of the slurry is. Therefore, preferably a circulation piping having a large diameter can be used within the range that does not interfere with the fastening part of the die.

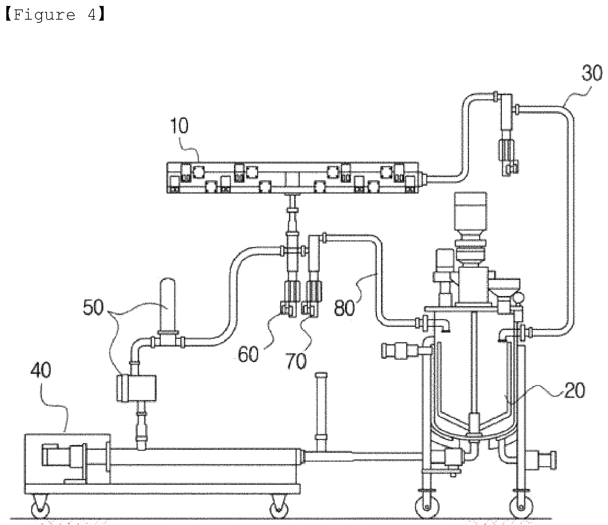

As shown in FIG. 4, the circulation piping 30, in one embodiment of the present invention, may further include a valve before being connected to the tank 20. In one embodiment of the present invention, the circulation piping 30 may further include a pump for transferring the slurry before being connected to the tank 20. The valve or pump positioned on the circulation piping is not particularly limited in the present invention, and may be a conventional valve or pump publicly known in the art.

In one embodiment of the present invention, the slurry circulation system for electrode coating is a system in which the slurry circulates through the circulation piping 30 connected from at least one of the left surface, the right surface, the rear surface, and the lower surface of the coating die 10 to the tank 20 at the time of a line stop. In the case of connecting the circulation piping 30 to the upper surface of the coating die 10, unlike the left surface, right surface, rear surface and lower surface of the coating die 10, since the flow direction of the slurry is formed from a direction with a low potential energy to a direction with a high potential energy, thereby generating resistance to gravity, there is a problem that the flow of the slurry circulation is relatively difficult to form smoothly, and the phenomenon of slurry leakage occurs at the lip end of the die.

In one embodiment of the present invention, the slurry circulation system for electrode coating may circulate the slurry by connecting the circulation piping to at least one of the left surface, the right surface, the rear surface, and the lower surface of the coating die, in order to minimize the interference of the fastening part depending on the position of the fastening part used for fastening the upper and lower plates of the die during the manufacturing process of the coating die 10. For example, the circulation piping may be connected to both the left and right surfaces of the coating die, to the lower surface only, or to the rear surface only.

As shown in FIGS. 4 and 6, the slurry circulation system for electrode coating may be a system in which the slurry is circulated through the circulation piping 30 connected from at least one of the left and right surfaces of the coating die 10 to the tank 20 at the time of a line stop.

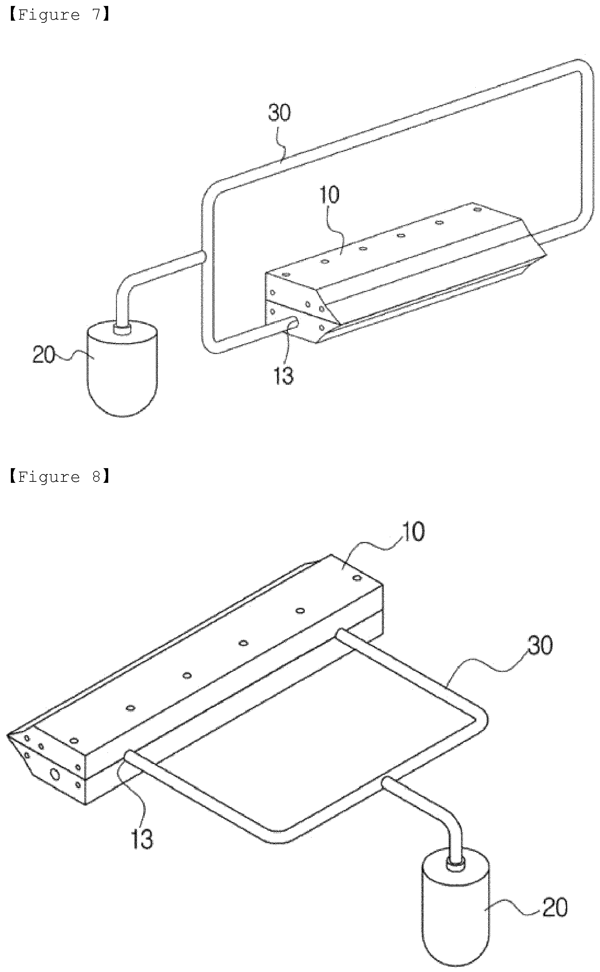

As shown in FIG. 5 and 7, the slurry circulation system for electrode coating may be a system in which the slurry circulates through each circulation piping 30 connected from the left and right surfaces of the coating die 10 to the tank 20 at the time of a line stop. Specifically, the slurry circulation system may be a system in which the electrode active material slurry supplied through the slurry supply hole 12 moves in both side directions inside the coating die through the slurry movement path, and circulates to the tank 20 through the circulation piping 30 connected to the connection hole 13 at the time of a line stop.

In one embodiment of the present invention, in the case of moving the electrode active material slurry in both side directions through the manifold part 11 inside the coating die 10 and then circulating the electrode active material slurry to the tank 20 through the circulation piping 30 connected to both sides, since the slurry circulates uniformly in both lateral directions without deviation for each area within the coating die, it is possible to prevent agglomeration or gelation of the slurry by being concentrated in a specific area within the coating die. Through this, there is an effect of preventing deterioration of the coating quality after the line stop, and maintaining a constant process temperature without deviation between the left and right sides of the coating die, and it is possible to check the circulation status through the left and right piping by mounting a thermometer, flowmeter, or pressure gauge in the circulation piping.

As shown in FIGS. 8 and 11, the slurry circulation system for electrode coating, in one embodiment of the present invention, may be a system in which the slurry circulates through the circulation piping 30 connected from the rear surface of the coating die 10 to the tank 20 at the time of a line stop. In the case of circulating the slurry through the circulation piping 30 connected from the rear surface of the coating die 10 to the tank 20, there is an advantage that it can be less affected by the interference caused by the bolts connecting the upper and lower plates of the die, as compared to the case of connecting the circulation valve to the other surface of the coating die.

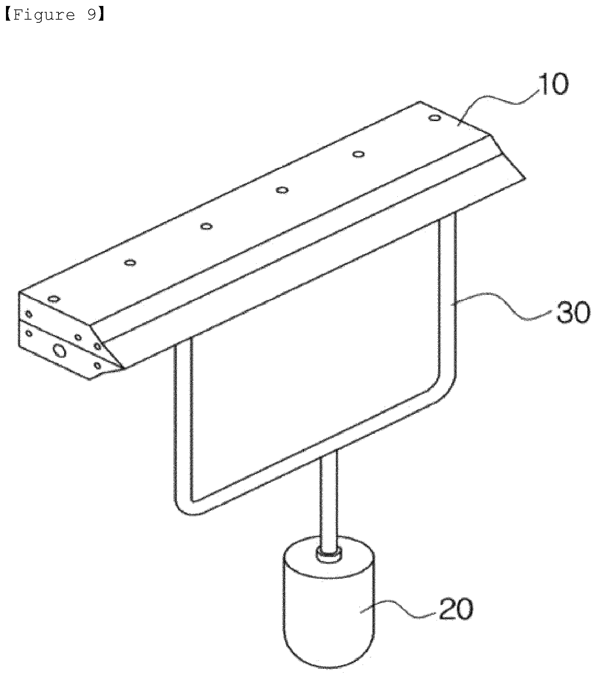

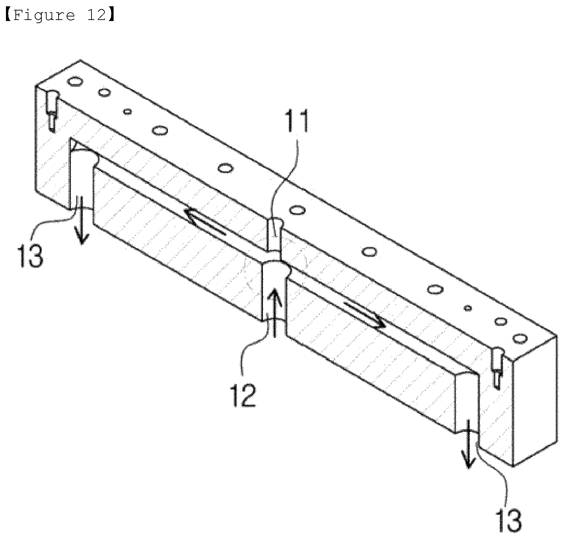

As shown in FIGS. 9 and 12, the slurry circulation system for electrode coating may be a system in which the slurry circulates through the circulation piping 30 connected from the lower surface of the coating die 10 to the tank 20 at the time of a line stop.

As shown in FIGS. 10 to 12, the circulation piping 30 of the slurry circulation system for electrode coating may be connected to both left and right ends of the manifold part 11 located inside the coating die 10, and specifically, the circulation piping 30 may be connected to left and right ends of the second flow path located inside the coating die 10. If the circulation piping 30 is connected to an intermediate position rather than both ends of the manifold part, the flow rate is reduced and the slurry stagnation phenomenon may occur due to low shear stress.

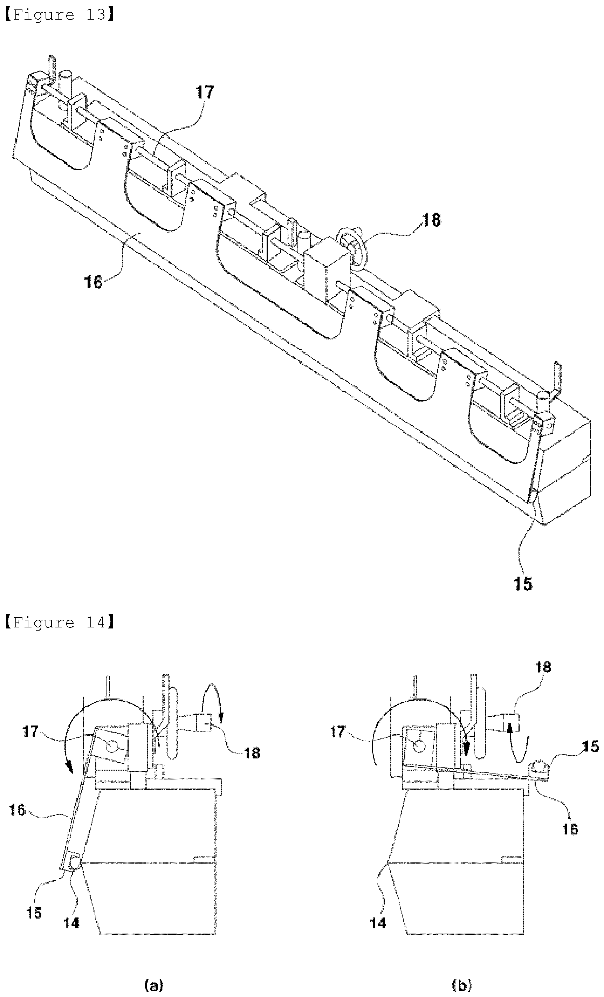

As shown in FIG. 13, the coating die 10, in one embodiment of the present invention, may be provided with a discharging part 14 to which the electrode coating slurry is discharged, and the lip guard 15 capable of blocking or opening the discharging part 14 may be provided on the discharging part 14. The lip guard 15 is positioned at one end of the lip cover 16 to block or open the discharging part 14, and this lip cover 16 is connected to the lip cutter shaft 17 and may operate to block or open the discharging part 14 by manipulating the handle 18. The lip cover 16 or the lip cutter shaft 17 is not particularly limited as long as it is made of a material that is not easily corroded and has enough rigidity to move the lip guard 15 and block the discharging part, and preferably, the lip cover 16 or the lip cutter shaft 17 may be made of a material such as SUS.

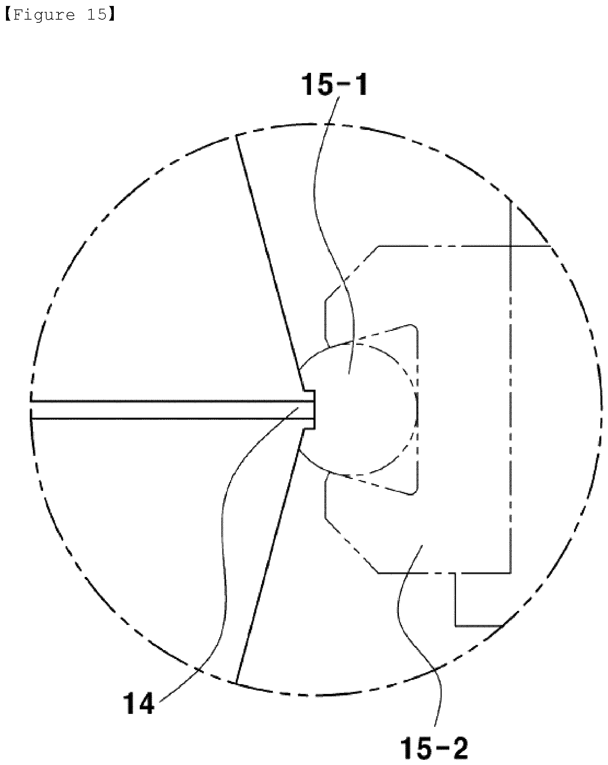

Specifically, the lip guard 15 may block the discharging part 14 as shown in FIG. 14(A) when the electrode coating slurry is not discharged. Through this, it is possible not only to prevent leakage of the electrode coating slurry, but also not to interfere with the overall circulation of the electrode coating slurry. In addition, the lip guard 15 should not block the discharging part 14 as shown in FIG. 14(B) when the electrode coating slurry is discharged. To this end, the lip guard 15 is in direct contact with the discharging part 14 as shown in FIG. 15, and thus is provided with a lip guard contact portion 15-1 for preventing the discharge of the electrode coating slurry and a lip guard fixing portion 15-2 for fixing the lip guard contact portion 15-1. The lip guard contact portion 15-1 may be made of a material having elasticity in order to completely block the discharging part 14, but is not necessarily limited thereto. The lip guard fixing part 15-2 may also fix the lip guard contact part 15-1 and be made of, for example, plastic, but is not necessarily limited thereto.

In addition, a protective film, in one embodiment of the present invention, is additionally formed on the lip guard 15 so that it is not affected by solvents such as NMP. Such a protective film is not particularly limited as long as it is not affected by solvents such as NMP, and for example, such a protective film may be, for example, a Teflon film or a Teflon tape.

As shown in FIGS. 4 and 5, the slurry circulation system for electrode coating, in one embodiment of the present invention, may further comprise a pump 40 for supplying the slurry from the tank 20 to the coating die 10; a filter 50; and a valve 60 connected to the slurry supply hole 12. The electrode active material slurry supplied from the tank 20 starts to circulate through the pressure of the pump 40, and may be transferred to the filter 50 for removal of impurities and the valve 60 in this order, and then transferred to the coating die 10.

In one embodiment of the present invention, the pump 40is not particularly limited in the present invention as long as it can transfer the electrode active material slurry, and may be a conventional pump publicly known in the art. In one embodiment of the present invention, the filter 50 is not particularly limited in the present invention as long as it can filter the slurry during circulation of the electrode active material slurry, and may be a conventional pump publicly known in the art. In one embodiment of the present invention, the valve 60 is not particularly limited in the present invention as long as it is configured to control the circulation of the electrode active material slurry through opening and closing, and may be a conventional pump known in the art.

In one embodiment of the present invention, the slurry circulation system for electrode coating further comprises a return valve 70, and a drain piping 80 connecting the return valve and the tank, and can discharge a part of the electrode active material slurry supplied from the tank 20 to the tank 20 through the drain piping 80 by opening the return valve 70 at the time of a line stop. Separately from the circulation piping 30, a part of the electrode active material slurry can be drained at the time of a line stop, through the return valve 70 and the drain piping 80 located at the lower part of the coating die 10. Through this, it is possible to have the effect of preventing the leakage of the slurry at the lip end of the coating die.

In one embodiment of the present invention, the slurry circulation method for electrode coating uses the slurry circulation system as described above. The slurry circulation method for electrode coating has the effect of improving the coating quality and improving the productivity of the process by circulating the slurry from at least one of the left surface, the right surface, the rear surface, and the lower surface of coating die 10 of the slurry circulation system to the tank 20 through the circulation piping 30 connected to the tank 20 at the time of a line stop, and thus maintaining the internal temperature of the coating die 10 constant without the phenomenon of agglomeration or gelation due to stagnation of the slurry in a specific area within the coating die 10, thereby minimizing surface defects or line defects after line stop.

### [Description of Symbol]

10: Coating die
11: Manifold part
12: Slurry supply hole
13: Connection hole for connecting circulation piping
14: Discharging part
15: Lip guard
16: Lip cover
17: Lip cover shaft
18: Handle part
20: Tank
30: Circulation piping
40: Pump
50: Filter
60: Valve
70: Return valve
80: Drain piping

## Claims

1. A slurry circulation system for electrode coating comprising,
a coating die (10) for applying an electrode active material slurry on a current collector,
wherein the coating die (10) comprises one manifold part (11) inside the die, and
wherein a slurry supply hole (12) connected to the manifold part (11) inside the die is located on the lower surface of the coating die (10), and
the manifold part (11) has a structure comprising a first flow path which comprises a first hollow part formed from the slurry supply hole (12) toward the upper surface; and a second flow path which comprises a second hollow part formed in both side directions around one end of the first flow path;
a tank (20) for storing the electrode active material slurry to be supplied to the coating die (10); and
a circulation piping (30) for connecting the coating die (10) and the tank (20),
**characterized in that**
the slurry circulation system for electrode coating is a system in which the slurry circulates through the circulation piping (30) connected from the rear surface of the coating die (10) to the tank (20) at the time of a line stop, and
wherein, optionally and additionally, the slurry circulates through the circulation piping (30) connected from at least one of a left surface, a right surface and a lower surface of the coating die (10) to the tank (20) at a time of a line stop.

2. The slurry circulation system for electrode coating according to claim 1, wherein a connection hole (13) for connecting the circulation piping (30) is located on the rear surface of the coating die (10) and, optionally and additionally, at least one of the left surface, the right surface and the lower surface of the coating die (10), and
the electrode active material slurry supplied through the connection hole (13) moves in both side directions inside the coating die (10) through a slurry movement path, and circulates to the tank (20) through the circulation piping (30) connected to the connection hole (13) at the time of a line stop.

3. The slurry circulation system for electrode coating according to claim 2, wherein the slurry circulation system for electrode coating further comprises a pump (40) for supplying the slurry from the tank (20) to the coating die (10); a filter (50); and a valve (60) connected to the connection hole (13).

4. The slurry circulation system for electrode coating according to claim 3, wherein the slurry circulation system for electrode coating further comprises a return valve (70); and a drain piping (80) connecting the return valve (70) and the tank (20) and wherein at the time of a line stop, the return valve (70) is configured to open so that a part of the electrode active material slurry supplied from the tank (20) is discharged into the tank (20) through the drain piping (80).

5. The slurry circulation system for electrode coating according to claim 1, wherein the coating die (10) is provided with a discharging part (14) to which the electrode coating slurry is discharged.

6. The slurry circulation system for electrode coating according to claim 5, wherein the coating die (10) is provided with a lip guard (15) arranged to block and open the discharging part (14).

7. A slurry circulation method for electrode coating using the slurry circulation system of claim 1.

## Patentansprüche

1. Slurry-Zirkulationssystem zur Elektrodenbeschichtung, aufweisend:
einen Beschichtungs-Die (10) zum Aufbringen eines Elektrodenaktivmaterial-Slurrys auf einen Stromabnehmer,
wobei der Beschichtungs-Die (10) einen Verteilerteil (11) innerhalb des Dies aufweist, und
wobei ein Slurry-Zufuhrloch (12), das mit dem Verteilerteil (11) innerhalb des Dies verbunden ist, an der unteren Oberfläche des Beschichtungs-Dies (10) angeordnet ist, und
wobei der Verteilerteil (11) eine Struktur aufweist, die aufweist: einen ersten Strömungsweg, der einen ersten hohlen Teil aufweist, der von dem Slurry-Zufuhrloch (12) in Richtung der oberen Oberfläche ausgebildet ist; und einen zweiten Strömungsweg, der einen zweiten hohlen Teil aufweist, der in beiden Seitenrichtungen um ein Ende des ersten Strömungswegs ausgebildet ist;
einen Tank (20) zum Speichern des Elektrodenaktivmaterial-Slurrys, der dem Beschichtungs-Die (10) zuzuführen ist; und
eine Zirkulationsrohrleitung (30) zum Verbinden des Beschichtungs-Dies (10) und des Tanks (20),
**dadurch gekennzeichnet, dass**
das Slurry-Zirkulationssystem zur Elektrodenbeschichtung ein System ist, in dem der Slurry durch die Zirkulationsrohrleitung (30) zirkuliert, die von der hinteren Oberfläche des Beschichtungs-Dies (10) mit dem Tank (20) zum Zeitpunkt eines Leitungsstopps verbunden ist, und
wobei, optional und zusätzlich, der Slurry durch die Zirkulationsrohrleitung (30) zirkuliert, die von mindestens einer von einer linken Oberfläche, einer rechten Oberfläche und einer unteren Oberfläche des Beschichtungs-Dies (10) mit dem Tank (20) zu einem Zeitpunkt eines Leitungsstopps verbunden ist.

2. Slurry-Zirkulationssystem zur Elektrodenbeschichtung nach Anspruch 1, wobei ein Verbindungsloch (13) zum Verbinden der Zirkulationsrohrleitung (30) an der hinteren Oberfläche des Beschichtungs-Dies (10) und, optional und zusätzlich, mindestens einer von der linken Oberfläche, der rechten Oberfläche und der unteren Oberfläche des Beschichtungs-Dies (10) angeordnet ist, und
wobei der Elektrodenaktivmaterial-Slurry, der durch das Verbindungsloch (13) zugeführt wird, sich in beiden Seitenrichtungen innerhalb des Beschichtungs-Dies (10) durch einen Slurry-Bewegungsweg bewegt und zu dem Tank (20) durch die Zirkulationsrohrleitung (30) zirkuliert, die mit dem Verbindungsloch (13) zum Zeitpunkt eines Leitungsstopps verbunden ist.

3. Slurry-Zirkulationssystem zur Elektrodenbeschichtung nach Anspruch 2, wobei das Slurry-Zirkulationssystem zur Elektrodenbeschichtung ferner aufweist: eine Pumpe (40) zum Zuführen des Slurrys von dem Tank (20) zu dem Beschichtungs-Die (10); einen Filter (50); und ein Ventil (60), das mit dem Verbindungsloch (13) verbunden ist.

4. Slurry-Zirkulationssystem zur Elektrodenbeschichtung nach Anspruch 3, wobei das Slurry-Zirkulationssystem zur Elektrodenbeschichtung ferner aufweist: ein Rückführventil (70); und eine Ablassrohrleitung (80), die das Rückführventil (70) und den Tank (20) verbindet, und wobei zum Zeitpunkt eines Leitungsstopps das Rückführventil (70) konfiguriert ist, geöffnet zu werden, so dass ein Teil des Elektrodenaktivmaterial-Slurrys, der von dem Tank (20) zugeführt wird, in den Tank (20) durch die Ablassrohrleitung (80) abgelassen wird.

5. Slurry-Zirkulationssystem zur Elektrodenbeschichtung nach Anspruch 1, wobei der Beschichtungs-Die (10) mit einem Ablassteil (14) versehen ist, zu dem der Elektrodenbeschichtungs-Slurry abgelassen wird.

6. Slurry-Zirkulationssystem zur Elektrodenbeschichtung nach Anspruch 5, wobei der Beschichtungs-Die (10) mit einem Lippenschutz (15) versehen ist, der angeordnet ist, das Ablassteil (14) zu blockieren und zu öffnen.

7. Slurry-Zirkulationsverfahren zur Elektrodenbeschichtung unter Verwendung des Slurry-Zirkulationssystems nach Anspruch 1.

## Revendications

1. Système de circulation de suspension épaisse pour revêtement d'électrode comprenant,
une matrice de revêtement (10) pour appliquer une suspension épaisse de matériau actif d'électrode sur un collecteur de courant,
dans lequel la matrice de revêtement (10) comprend une partie collecteur (11) à l'intérieur de la matrice, et
dans lequel un trou d'alimentation de suspension épaisse (12) raccordé à la partie collecteur (11) à l'intérieur de la matrice est situé sur la surface inférieure de la matrice de revêtement (10), et
la partie collecteur (11) a une structure comprenant un premier trajet d'écoulement qui comprend une première partie creuse formée depuis le trou d'alimentation en suspension épaisse (12) vers la surface supérieure ; et un deuxième trajet d'écoulement qui comprend une deuxième partie creuse formée dans les deux directions latérales autour d'une extrémité du premier trajet d'écoulement ;
un réservoir (20) pour stocker la suspension épaisse de matériau actif d'électrode à fournir à la matrice de revêtement (10) ; et
une tuyauterie de circulation (30) pour raccorder la matrice de revêtement (10) et le réservoir (20),
**caractérisé en ce que**
le système de circulation de suspension épaisse pour revêtement d'électrode est un système où la suspension épaisse circule par la tuyauterie de circulation (30) raccordée de la surface arrière de la matrice de revêtement (10) vers le réservoir (20) au moment d'un arrêt de ligne, et
dans lequel, en option et en plus, la suspension épaisse circule par la tuyauterie de circulation (30) raccordée depuis au moins une surface de gauche, une surface de droite et une surface inférieure de la matrice de revêtement (10) vers le réservoir (20) à un moment d'un arrêt de ligne.

2. Système de circulation de suspension épaisse pour revêtement d'électrode selon la revendication 1, dans lequel un trou de raccordement (13) pour raccorder la tuyauterie de circulation (30) est situé sur la surface arrière de la matrice de revêtement (10) et, en option et en plus, au moins soit la surface de gauche, la surface de droite et la surface inférieure de la matrice de revêtement (10), et
la suspension épaisse de matériau actif d'électrode fournie par le trou de raccordement (13) se déplace dans les deux directions latérales à l'intérieur de la matrice de revêtement (10) par un trajet de déplacement de suspension épaisse, et circule vers le réservoir (20) par la tuyauterie de circulation (30) raccordée au trou de raccordement (13) au moment d'un arrêt de ligne.

3. Système de circulation de suspension épaisse pour revêtement d'électrode selon la revendication 2, dans lequel le système de circulation de suspension épaisse pour revêtement d'électrode comprend en outre une pompe (40) pour fournir la suspension épaisse depuis le réservoir (20) vers la matrice de revêtement (10) ; un filtre (50) ; et une vanne (60) raccordée au trou de raccordement (13).

4. Système de circulation de suspension épaisse pour revêtement d'électrode selon la revendication 3, dans lequel le système de circulation de suspension épaisse pour revêtement d'électrode comprend en outre un clapet anti-retour (70) ; et une tuyauterie d'évacuation (80) raccordant le clapet anti-retour (70) et le réservoir (20) et dans lequel, au moment d'un arrêt de ligne, le clapet anti-retour (70) est configuré pour s'ouvrir de sorte qu'une partie de la suspension épaisse de matériau actif d'électrode fournie par le réservoir (20) est déchargée dans le réservoir (20) par la tuyauterie d'évacuation (80).

5. Système de circulation de suspension épaisse pour revêtement d'électrode selon la revendication 1, dans lequel la matrice de revêtement (10) est munie d'une partie décharge (14) vers laquelle la suspension épaisse de revêtement d'électrode est déchargée.

6. Système de circulation de suspension épaisse pour revêtement d'électrode selon la revendication 5, dans lequel la matrice de revêtement (10) est munie d'une protection de rebord (15) agencée pour bloquer et ouvrir la partie décharge (14).

7. Procédé de circulation de suspension épaisse pour revêtement d'électrode utilisant le système de circulation de suspension épaisse selon la revendication 1.
